# EUROPÄISCHE PATENTSCHRIFT

(11) **EP 0 402 843 B1**
(45) Veröffentlichungstag und Bekanntmachung des Hinweises auf die Patenterteilung: **25.08.1993**
(21) Anmeldenummer: 90111051.0
(22) Anmeldetag: 12.06.1990
(51) Int. Cl.: F16L 25/00

(54) **Druckfeste Verschraubung für gewellte Schläuche insbesondere aus Kunststoff**
Pressure sealed threaded connection for corrugated hoses, especially made of plastics
Raccord fileté tenant la pression pour tuyaux souples ondulés notamment en matière plastique

(30) Priorität: 15.06.1989 DE 3919516
(43) Veröffentlichungstag der Anmeldung: 19.12.1990
(73) Patentinhaber: EM-Technik GmbH, D-67133 Maxdorf (DE)
(72) Erfinder: Meier, Norbert, D-6701 Maxdorf (DE)
(74) Vertreter: Patentanwälte Zellentin & Partner

(56) Entgegenhaltungen:
- EP-A- 0 158 878
- CH-A- 94 903
- CH-A- 144 375
- CH-A- 158 908
- DE-U- 7 022 504
- FR-A- 2 361 592
- FR-A- 2 520 841
- GB-A- 1 371 609
- US-A- 3 008 738
- US-A- 3 393 267

## Beschreibung

Die vorliegende Erfindung betrifft eine druckfeste Verschraubung von Flüssigkeiten oder Gase führenden Schläuchen, insbesondere solchen aus Kunststoff, wie z.B. in der Labortechnik eingesetzt werden.

Gase oder Flüssigkeiten führende Schläuche werden z.B. über Verteiler geleitet, an die über Steckverbindungen oder Verschraubungen Schläuche trennbar angeschlossen werden.

Die druckfeste Verbindung glatter Schläuche bietet hierbei keine Schwierigkeiten. Die druckfeste Verbindung von gewellten Schläuchen mit entsprechenden Anschlüssen stellt jedoch ein bisher nicht befriedigend gelöstes Problem dar.

So wird z.B. in der Europäischen Patentschrift 0 158 878 ein Steckanschluß für gewellte Kunststoffschläuche beschrieben, bei welchem der Schlauch mit dem Verbindungsteil durch Anspritzen verbunden wird, wobei der Abstand zwischen den äußeren Ringwellen des Schlauches im Bereich der Überspritzung unter Beibehaltung des Abstandes zwischen den inneren Ringwellungen von dem Kunststoffmaterial des muffenartigen Verbindungsteils bis zum Grund der Ringwellungen ausgefüllt ist.

Diese Vorgehensweise ist aufwendig, müßte bei jedem Schlauchende eigens vorgenommen werden und schafft insbesondere keine lösbare Verbindung mit dem Anschlußstück.

Aus der US-A-33 93 267 ist eine weitere Verschraubung für gewellte Schläuche bekannt. Dabei sind die Schläuche aus einem innenliegenden gewellten Material aufgebaut und außen mit einem glatten Mantel umgeben. Der Schlauchanschlußzapfen weist einen Gewindegang auf, auf den die innenliegende Wellung aufgeschraubt wird. Auf den glatten Außenmantel ist ein Konusring aufgeschoben und im verschraubten Zustand durch eine Mutter an dem Verschraubungsstück über ein Gewinde gehalten. Der glatte Mantel ist hierbei auf einen an den Schlauchanschlußzapfen anschließenden Flansch geschoben und wird über den Konusring durch die Mutter gegen den Flansch gepreßt, um so den Schlauch abzudichten. Eine solche Lösung scheidet für Schläuche aus, die auch außen gewellt, d.h. nicht von glattem Material umschlossen sind.

Die vorliegende Erfindung hat sich daher die Aufgabe gestellt, eine verschraubbare und wieder lösbare Verbindung mit einem Verschraubungskörper für gewellte Schläuche, insbesondere aus Kunststoff, zu schaffen, mit der auch außen gewellte Schläuche druckfest verschraubt werden können.

Die Lösung dieser Aufgabe gelingt erfindungsgemäß durch eine Verschraubung eines gewellten Schlauches, bestehend aus einem Verschraubungskörper und einer auf diesen aufschraubbaren Überwurfmutter mit einer Durchführung für den gewellten Kunststoffschlauch, wobei sich an das Gewinde für die Verschraubung mit der Überwurfmutter ein Schlauchanschluß anschließt, der einen geringeren Durchmesser aufweist als das Gewinde, bei welchem beabstandet von dem Rücksprung zwischen dem Schlauchanschlußzapfen und dem Gewinde auf dem Schlauchanschlußzapfen eine ringförmige Wulststelle angeordnet ist und die Überwurfmutter endseitig eine Einziehung aufweist, die so bemessen ist, daß sie etwa dem auf dem ebenen Teil des Anschlußzapfens liegenden Außendurchmesser des gewellten Kunststoffschlauches entspricht und in verschraubtem Zustand um die Wulststelle an dem Schlauch anliegt, wobei Wulststelle und Einziehung unter Belassung eines Spaltes zwischen Wulst und Einziehung übereinander bringbar sind.

Der Außendurchmesser ist dabei dem Innendurchmesser des gewellten Schlauches derart angepaßt, daß letzterer auf diesen und über die Wulststelle aufgeschoben werden kann. Durch die Wulststelle entsteht eine Erweiterung des Schlauchdurchmessers.

Nach dem Aufschrauben der Überwurfmutter wird die Erweiterung des Schlauches durch deren Einziehung in Preßsitz gehalten, der die Verbindung abdichtet. Versuche haben eine Druckdichtigkeit bei Flüssigkeiten bis 14 bar und darüber ergeben, was als überraschend hoch angesehen werden muß.

Ein besonders leichtes Aufschieben des Kunststoffschlauches sowie eine hohe Druckfestigkeit ergeben sich bei einer ausgerundeten Gestaltung des Wulstes.

Die Wulststelle überragt dabei den Anschlußzapfen deutlich, vorteilhafterweise um etwa die halbe Stärke der Wellung des Schlauches.

Nach dem Aufschrauben der Überwurfmutter liegt die Einziehung auf der Außenwellung des Schlauches auf und drückt diese flach, ohne jedoch den Schlauch spaltfrei zwischen Wulst und Einziehung einzuzwängen. Dabei wird durch die Abflachung mindestens eine berührte Welle verbreitert.

Die Einziehung selbst ist dabei so bemessen, daß sie etwa dem auf dem ebenen Teil des Anschlußzapfens liegenden Außendurchmesser des Schlauches entspricht. Wulststelle und Einziehung sind unter Belassung eines Spaltes übereinander bringbar, in dem der Schlauch dichtend gestaucht wird, wobei die Wellung jedoch nicht soweit flachgedrückt wird, daß sie sich plastisch verformt.

Um einen sicheren Verschluß auch bei nichtmittiger Abdeckung auf der Welle zu gewährleisten, wird vorgeschlagen, daß ihre Breite etwa zwei Breiten der Schlauchwellung ausmacht.

Ein weiterer Vorschlag, gewellte Schläuche druckfest an Verschraubungen zu befestigen, betrifft erfindungsgemäß eine konische Ausgestaltung des Schlauchanschlußzapfens, wobei dann die Wulststelle fehlen kann. Der Schlauch wird auf den konischen Anschlußzapfen gegen den Rücksprung geschoben. Beim Aufschrauben der Überwurfmutter nimmt die Einziehung wegen ihrer konischen Ausbildung mehrere Wellenberge des Schlauches mit und staucht sie gegen den Rücksprung am inneren Ende des Schlauchanschlußzapfens, wodurch die Dichtigkeit der Verbindung gegenüber der Wulstausführung weiter erhöht wird.

In besonders eleganter Weise wird der Konus auf dem Schlauchanschlußzapfen dadurch bewirkt, daß auf diesen eine Manschette mit konischer Außenfläche aufgeschoben wird. Auf diese Weise können auch für glatte Schläuche geeignete Schlauchverbindungen in solch für Wellen aufweisende Schläuche geeignete modifiziert werden.

Dabei ist die Manschette vorzugsweise auf den Schlauchanschlußzapfen aufgepreßt. Da das Aufschieben und Stauchen des Schlauches insbesondere bei flachen Steigungen des Konus durch Materialreibung erschwert sein kann, wird weiterhin vorgeschlagen, die Manschette aus Polytetrafluorethylen (PTFE) auszubilden, da sich dieses Material wegen seiner Materialeigenschaften als besonders geeignet erwiesen hat.

Die Manschette kann dabei selbst einen Kragen besitzen, der als Anschlag für das Zusammenschieben der Schlauchwellen dient. Es ist dabei ohne weiteres möglich, zwischen Wellen und Anschlag oder Rücksprung einen weich-elastischen O-Ring einzulegen, der z.B. Ungleichheiten des Schlauchausschnittes ausgleicht.

Anhand der beiliegenden Figuren wird die vorliegende Erfindung näher erläutert.
**Figur 1** zeigt die Ausführung mit Wulst
**Figur 2** zeigt die Ausführung des Anschlusses mit Konus Die Verschraubung der **Figur 1** besteht aus dem Verschraubungskörper 7 mit einem Außengewinde 1 sowie der mit diesem verbindbaren Überwurfmutter 2. Der Mutter 2 gegenüberliegend ist ein Sechskant 8 sowie ein Gewindeanschluß 9 angeformt, der der Verschraubung mit einem (nicht dargestellten) Verteiler, einem Mehrwegehahn oder dergleichen dient, wobei anstelle eines Schraubanschlusses auch ein Bajonett oder eine andere (dichtende) Verbindung gewählt werden kann.

An das Außengewinde 1 schließt sich am Verschraubungskörper 7 über einen Rücksprung 4 ein Schlauchanschlußzapfen 3 an, der etwa mittig eine Wulststelle 5 aufweist. Die Wulststelle ist abgerundet (kreisförmig oder elliptisch, insbesondere mit gleitenden Übergängen zur Mantelfläche des Anschlußzapfens 3) und in ihrer Stärke dem darübergeschobenen gewellten Schlauch 10 bzw. dessen Wandstärke angepaßt. Die Länge des Schlauchanschlußzapfens 3 ist dabei so gewählt, daß der Schlauch 10 gut geführt ist.

Auf das Außengewinde 1 ist die Überwurfmutter 2 aufgeschraubt und klemmt unter Abflachung mindestens einer Welle 11 des Schlauches 10 diesen in Preßsitz, wobei zwischen Wulststelle 5 und abgeflachter Welle 11 ein Freiraum verbleibt, d.h. der Schlauch wird vorzugsweise nicht flächig auf die Wulststelle 5 gedrückt.

Der Rücksprung 6 stellt einerseits die Durchführung für den gewellten Schlauch 10 dar und weist andererseits einen derartigen Innendurchmesser auf, daß er über den Außendurchmesser des nicht aufgeweiteten Schlauch gleitet. Zur Erleichterung des Aufgleitens auf die aufgeweitete(n) Welle(n) 11 des Schlauches 10 kann die Einziehung 6 zum Rücksprung 4, der gleichzeitig einen Anschlag für den gewellten Schlauch 10 darstellt, hin, z.B. konisch aufgeweitet sein.

Das Schlauchmaterial ist nicht auf Kunststoff beschränkt, besteht jedoch vorzugsweise daraus. Es kommen darüberhinaus Gummimaterialien, wie auch gewebeverstärkte- oder Verbundwerkstoffe in Frage. In gleicher Weise bestehen die Verschraubungskörper 7 und die Überwurfmutter aus Kunststoff.

Von dem Begriff Überwurfmutter sollen hier gleichwirkende Lösungen, wie z.B. Steckverbindungen mitumfaßt verstanden werden.

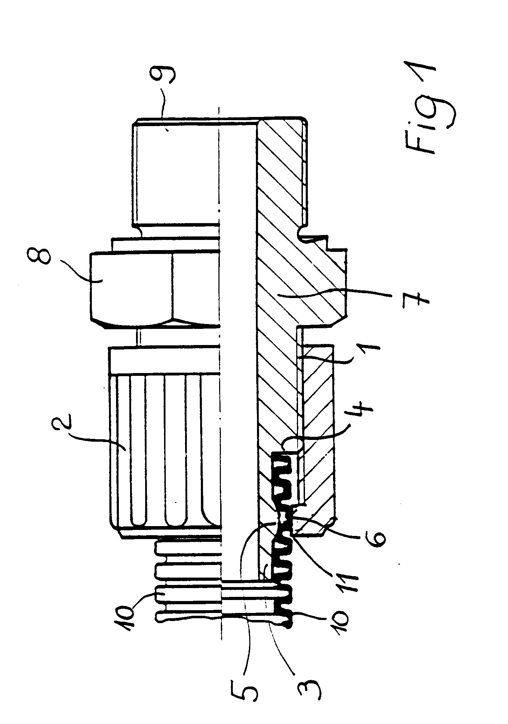

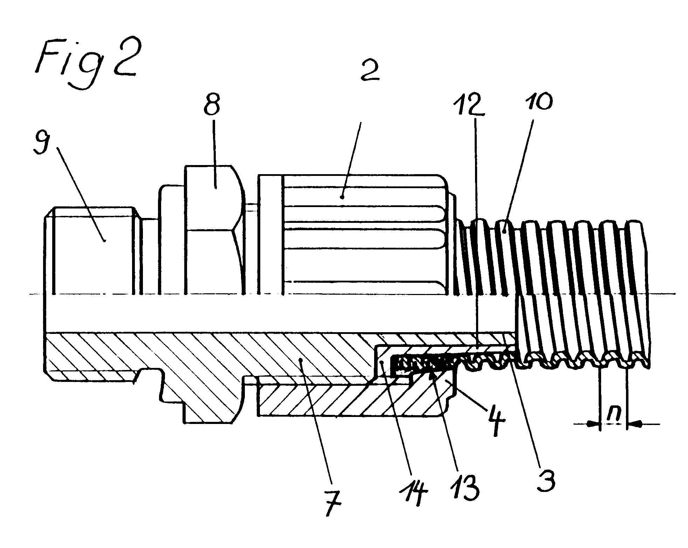

In **Figur 2** ist eine Variante dargestellt, bei welcher anstelle des Wulstes 5 der Figur 1 der gewellte Schlauch 10 auf einen Konus aufgeschoben ist. Dabei ist der Rücksprung 4 der Überwurfmutter 2 mit einem (relativ steilen) sich nach innen aufweitenden Konus 13 versehen, der beim Aufschrauben der Überwurfmutter 2 mehrere Wellen auf dem Konus des Schlauchanschlußzapfens 3 zusammenschiebt und gegen einen beschlag (Rücksprung 4 in Figur 1) drückt. Auf diese Weise entsteht im zusammengeschobenen Bereich eine einem glatten Schlauch ähnliche Konfiguration, wodurch die Dichtigkeit gesteigert werden kann.

In der vorliegenden Darstellung ist auf den Schlauchanschlußzapfen 3 eine Manschette 12 aufgepreßt, an die endseitig ein Kragen 14 angeformt ist. Diese Manschette 12 kann vorzugsweise aus PTFE hergestellt werden, da dieses Material das Aufschieben des Schlauches 10 auf die Manschette 12 erleichtert.

Die Steigung des Manschettenkonus und des Konus 13 des Rücksprungs 4 hängen vom Schlauchdurchmesser und vom Material des gewellten Schlauches 10 ab.

Inu der Darstellung ist erkennbar, daß die Wellung des Schlauches 10 durch eine Wendel bewirkt ist. Beim Ablängen des Schlauches können sich an der Schnittstelle Unebenheiten ergeben. Um diese auszugleichen und um die Dichtigkeit bei höheren Temperaturen zu steigern, kann zwischen den Kragen 14 bzw. den Rücksprung 4 und dem Schlauchende ein O-Ring aus elastischem Material, etwa aus Gummi, eingelegt werden.

In beiden Fällen der **Figur 1** und der **Figur 2** besteht neben der gesteigerten Dichtigkeit ein besonderer Vorteil der vorliegenden Erfindung darin, daß die Wellung des Schlauches erhalten bleibt, d.h. dieser kann mehrfach abgezogen und neu angeschlossen werden, ohne daß durch zu starke Deformation die Dichtigkeit des Anschlusses leidet.

## Patentansprüche

1. Druckfeste Verschraubung eines gewellten Schlauches mit einer Außenwellung, insbesondere aus Kunststoff, bestehend aus einem Verschraubungskörper (1) und einer auf diesen aufschraubbaren Überwurfmutter (2) mit einer Durchführung für den Schlauch (10), wobei sich an das Gewinde (1) für die Verschraubung mit der Überwurfmutter (2) ein Schlauchanschlußzapfen (3) anschließt, der einen geringeren Durchmesser aufweist als das Gewinde (1), wobei beabstandet von dem Rücksprung (4) zwischen dem Schlauchanschlußzapfen (3) und dem Gewinde (1) auf dem Schlauchanschlußzapfen (3) eine ringförmige Wulststelle (5) angeordnet ist und die Überwurfmutter (2) endseitig eine Einziehung (6) aufweist, die so bemessen ist, daß sie etwa dem auf dem ebenen Teil des Anschlußzapfens (3) liegenden Außendurchmesser des gewellten Kunststoffschlauches entspricht und in verschraubtem Zustand um die Wulststelle an dem Schlauch (10) anliegt, wobei Wulststelle (5) und Einziehung (6) unter Belassung eines Spaltes zwischen Wulst (5) und Einziehung (6) übereinander bringbar sind.

2. Verschraubung nach Anspruch 1, **dadurch gekennzeichnet**, daß die Wulststelle (5) ausgerundet ist.

3. Verschraubung nach Anspruch 1 oder 2, **dadurch gekennzeichnet,** daß die Wulststelle (5) gegenüber dem ebenen Teil des Schlauchanschlußzapfen (3) um etwa eine halbe Schlauchstärke übersteht.

4. Verschraubung nach mindestens einem der Ansprüche 1 bis 3, **dadurch gekennzeichnet**, daß die Breite der Einziehung (6) der Überwurfsmutter (2) etwa zwei Wellenbreiten des Schlauches entspricht.

5. Verschraubung nach Anspruch 1, **dadurch gekennzeichnet**, daß anstelle des Wulstes der Schlauchanschlußzapfen (3) konisch ausgebildet ist, und daß die Einziehung (6) der Überwurfmutter (2) einen sich nach innen erweiternden Konus (13) besitzt, der so bemessen ist, daß beim Aufschrauben der Überwurfmutter (2) auf den Verschraubungskörper (7) mehrere Wellen des Schlauches (10) gegen den Rücksprung (4) zusammengeschoben werden.

6. Verschraubung nach den Ansprüchen 1 bis 4, **dadurch gekennzeichnet**, daß auf den Schlauchanschlußzapfen (3) eine Manschette (12) mit konischer Außenfläche aufgeschoben ist.

7. Verschraubung nach Anspruch 6, **dadurch gekennzeichnet**, daß die Manschette (12) auf den Schlauchanschlußzapfen (3) aufgepreßt ist.

8. Verschraubung nach Anspruch 6 oder 7, **dadurch gekennzeichnet**, daß die Manschette (12) aus Polytetrafluorethylen besteht.

9. Verschraubung nach mindestens einem der Ansprüche 5 bis 8, **dadurch gekennzeichnet**, daß zwischen Schlauch (10) und Rücksprung (4) oder einem Kragen (14) der Manschette (12) ein O-Ring eingelegt ist.

## Claims

1. Compression-resistant screw connection of a corrugated pipe with an external corrugation, especially of synthetic material, consisting of a screw connection member (1) and a union nut (2) screwable on this with a passage for the pipe (10), whereby, on the thread (1) for the screw connection with the union nut (2), there is connected a pipe connection member (3) which has a smaller diameter than the thread (1), whereby, distanced from the shoulder (4), between the pipe connection member (3) and the thread (1) there is arranged an annular bead position (5) on the pipe connection member (3) and the union nut (2) has a neck (6) on the end which is so dimensioned that it corresponds approximately to the outer diameter of the corrugated synthetic material pipe lying on the flat part of the connection member (3) and, in the screwed-on state, lies around the bead position against the pipe (10), whereby bead position (5) and neck (6) can be brought over one another with the leaving of a gap between bead (5) and neck (6).

2. Screw connection according to claim 1, characterised in that the bead position (5) is rounded.

3. Screw connection according to claim 1 or 2, characterised in that the bead position (5) projects by about a half pipe thickness with regard to the flat part of the pipe connection member (3).

4. Screw connection according to at least one of claims 1 to 3, characterised in that the breadth of the neck (6) of the union nut (2) corresponds to about two corrugation breadths of the pipe.

5. Screw connection according to claim 1, characterised in that, instead of the bead, the pipe connection member is made conical and that the neck (6) of the union nut (2) possesses an internally widening cone (13) which is so dimensioned that, in the case of the screwing on of the union nut (2) on to the screw-on member (7), several corrugations of the pipe (10) are pushed together against the shoulder (4).

6. Screw connection according to claims 1 to 4, characterised in that a cuff (12) with conical outer surface is pushed on to pipe connection member (3).

7. Screw connection according to claim 6, characterised in that the cuff (12) is pressed against the pipe connection member (3).

8. Screw connection according to claim 6 or 7, characterised in that the cuff (12) consists of polytetrafluoroethylene.

9. Screw connection according to at least one of claims 5 to 8, characterised in that an 0-ring is inserted between pipe (10) and shoulder (4) or a collar (14) of the cuff (12).

## Revendications

1. Raccord fileté, résistant à la pression, d'un tuyau ondulé possédant une ondulation extérieure, notamment en matière plastique, constitué par un corps (1) et un écrou-raccord (2) vissable sur ce corps et comportant une traversée pour le tuyau (10), et dans lequel au filetage (1) prévu pour le vissage de l'écrou-raccord (2) se raccorde un embout de raccordement de tuyau (3), qui possède un diamètre inférieur au filetage (1), et dans lequel un bourrelet annulaire (5) est disposé, à distance de l'épaulement (4) entre l'embout de raccordement de tuyau (3) et le filetage (1), sur l'embout de raccordement de tuyau (3), et l'écrou-raccord (2) possède, à son extrémité, une partie rétrécie (6) dimensionnée de manière à correspondre approximativement à la partie extérieure, qui s'applique sur la partie plane de l'embout de raccordement (3), du tuyau ondulé en matière plastique et, à l'état vissé, à s'appliquer contre le tuyau (10) autour du rebord, le bourrelet (5) et la partie rétrécie (6) pouvant être amenés en superposition tout en laissant subsister une fente entre le bourrelet (5) et la partie rétrécie (6).

2. Raccord fileté selon la revendication 1, caractérisé en ce que le bourrelet (5) est arrondi.

3. Raccord fileté selon la revendication 1 ou 2, caractérisé en ce que le bourrelet (5) fait saillie approximativement sur la moitié de l'épaisseur du tuyau, par rapport à la partie unie de l'embout de raccordement de tuyau (3).

4. Raccord fileté selon au moins l'une des revendications 1 à 3, caractérisé en ce que la largeur de la partie rétrécie (6) de l'écrou-raccord (2) correspond approximativement au double de la largeur du tuyau.

5. Raccord fileté selon la revendication 1, caractérisé en ce qu'au lieu de comporter le bourrelet, l'embout de raccordement de tuyau (3) possède une forme conique, et que la partie rétrécie (6) de l'écrou-raccord (2) possède un cône (13) qui s'élargit vers l'intérieur et est dimensionné de telle sorte que lors du vissage de l'écrou-raccord (2) sur le corps (7) du raccord fileté, plusieurs ondulations du tuyau (10) sont repoussées contre l'épaulement (4).

6. Raccord fileté selon les revendications 1 à 4, caractérisé en ce qu'un manchon (12) possédant une surface extérieure conique est emmanché sur l'embout de raccordement de tuyau (3).

7. Raccord fileté selon la revendication 6, caractérisé en ce que le manchon (12) est emmanché à force sur l'embout de raccordement de tuyau (3).

8. Raccord fileté selon la revendication 6 ou 7, caractérisé en ce que le manchon (12) est réalisé en polytétrafluoroéthylène.

9. Raccord fileté selon au moins l'une des revendications 5 à 8, caractérisé en ce qu'une bague torique est insérée entre le tuyau (10) et l'épaulement (4) ou un collet (14) du manchon (12).
